# EUROPÄISCHE PATENTSCHRIFT

(11) **EP 1 043 660 B1**
(45) Veröffentlichungstag und Bekanntmachung des Hinweises auf die Patenterteilung: **25.06.2014**
(21) Anmeldenummer: 00107593.6
(22) Anmeldetag: 07.04.2000
(51) Int. Cl.: G06F 11/14, G06F 11/07, G06F 11/36

(54) **Fehlersicheres Automatisierungssystem**
Fail-safe automation system
Système d'automatisation à sécurité intégrée

(30) Priorität: 09.04.1999 DE 19916044
(43) Veröffentlichungstag der Anmeldung: 11.10.2000
(73) Patentinhaber: Siemens Aktiengesellschaft, 80333 München (DE)
(72) Erfinder: Schenk, Andreas, Dipl.-Ing., 91052 Erlangen (DE); Hahne, Michael, Dipl.-Ing.(FH), 92245 Kümmersbruck (DE)

(56) Entgegenhaltungen:
- US-A- 5 850 550
- A. BENSO, F. CORNO, P. PRINETTO, M. REBAUDENGO, M. SONZA REORDA: "FATO: a software FAult TOlerant approach" IEEE INTERNATIONAL ON-LINE TESTING WORKSHOP, 1997, Seiten 17-21, XP008063737 Crete, Greece
- M. REBAUDENGO, M. SONZA REORDA: "Evaluating cost and effectiveness of software redundancy techniques for hardware errors detection" DIGEST OF FASTABSTRACTS: FTCS28, THE 28TH ANNUAL INTERNATIONAL SYMPOSIUM ON FAULT TOLERANT COMPUTING, [Online] 1998, Seiten 88-89, XP002379447 Munich Gefunden im Internet: URL:citeseer.ist.psu.edu/423130.html> [gefunden am 2006-04-25]
- A. AVIZIENIS: "The N-version approach to fault-tolerant software" IEEE TRANSACTIONS ON SOFTWARE ENGINEERING, Bd. SE-11, Nr. 12, Dezember 1985 (1985-12), Seiten 1491-1501, XP008063631
- J. HUDAK, B. H. SUH, D. SIEWIOREK, Y. SEGALL: "Evaluation & Comparison of Fault-tolerant Software Techniques" IEEE TRANSACTIONS ON RELIABILITY, Bd. 42, Nr. 2, Juni 1993 (1993-06), Seiten 190-204, XP002379448
- LU D J: "WATCHDOG PROCESSORS AND STRUCTURAL INTEGRITY CHECKING", IEEE TRANSACTIONS ON COMPUTERS, IEEE SERVICE CENTER, LOS ALAMITOS, CA, US, vol. C-31, no. 7, 1 July 1982 (1982-07-01) , pages 681-685, XP000748217, ISSN: 0018-9340

## Beschreibung

Die Erfindung betrifft ein Automatisierungssystem und ein Verfahren für ein fehlersicheres Automatisierungssystem.

Der Erfindung liegt die Erkenntnis zugrunde, dass bei fehlersicheren Automatisierungssystemen auch an die Umgebung zur Erstellung des sicherheitsgerichteten Programms Sicherheitsanforderungen gestellt werden - insbesondere bei der Codegenerierung. Die IEC 61508-3 fordert zum Beispiel für Tools und Übersetzer ein Zertifikat oder Betriebsbewährtheit. Die Codegenerierung darf auch durch Fehler in der Hardware der Erstellumgebung nicht unerkannt verfälscht werden.

Ein Softwarefehler-Detektionsverfahren mit dem Namen FATO ist aus der Veröffentlichung "FATO: A software FAult TOlerant approach", A. Benso, F. Corno, P. Prinetto, M. Rebaudengo, M. Sonza Reorda, IEEE International On-Line Testing Workshop, 1997, S. 17 - 21, Crete, Greece bekannt. Das Verfahren zur Softwarefehlerdetektion beinhaltet dabei die Duplikation einiger Variablen des Softwareprogramms, um Datenredundanz zu erzeugen. Des Weiteren beschreibt die Veröffentlichung die Verwendung von Konsistenzüberprüfungen innerhalb des Kontrollflusses des Programms, um eventuelle Softwarefehler unter Verwendung der duplizierten Programmvariablen zu detektieren.

In der Veröffentlichung "Evaluating cost and effectiveness of software redundancy techniques for hardware errors detection", M. Rebaudengo, M. Sonza Reorda, Digest of fastabstracts: FTCS28, the 28th annual international symposium on fault tolerant computing, 1998, Seiten 88-89 wird das FATO-Softwarefehler-Detektionsverfahren hinsichtlich seiner Kosten und Effektivität analysiert.

Im Dokument US 5,850,550 wird ein System und Verfahren zur Übersetzung von Quellcode, welcher high-level Quellcode mit eingebetteten SQL-Befehlen beinhaltet, in p-code oder Anweisungen in Maschinensprache durch einen one-pass parsing Mechanismus. Der one-pass parsing Mechanismus erzeugt ausführbaren Code ohne dass eine Zwischendatei erzeugt werden muss. Zusätzlich sind der p-code oder die Anweisungen in Maschinensprache mit Bezugszeichen zu den Zeilennummern des entsprechenden Quellcodes versehen, sodass ein Debugger auf Quellniveau den Quellcode mit den eingebetteten SQL-Befehlen debuggen kann.

In A.Avizienis: "The N-version approach to fault tolerant software", IEEE transactions on software engineering, Bd. SE-11, Nr. 12, Dezember 1985, Seiten 1491-1501, wird die Entwicklung des N-Version software approach für die Toleranz von Erstellungsfehlern diskutiert. Hauptsächliche Anforderungen für die Implementierung von N-version Software werden zusammengefasst und der DEDIX distributed supervisor und Prüfumgebung für die Ausführung von N-version Software werden beschrieben.

In Lu D. J.:"Watchdog Processors and Structural Integrity Checking", IEEE transactions on computers, IEEE Service Center, Los Alamitos, CA, US, Bd. C-31, Nr. 7, 1.Juli 1982, Seiten 681-685, wird die Verwendung eines Watchdog-Prozessors bei der Implementierung der Prüfung der strukturellen Integrität (SIC) beschrieben. Es wird ein Model für ideale SIC bezogen auf formale Sprachen und Automaten angegeben, Techniken für die Implementierung von SIC werden präsentiert, und die Modifikation eines Pascal-Compilers in einen SIC-Pascal Vorprozessor wird zusammengefasst.

Der Erfindung liegt demgegenüber die Aufgabe zugrunde, ein fehlersicheres Automatisierungssystem zu schaffen. Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

In bisherigen Lösungen wurden folgende Alternativen zur Schaffung von fehlersicheren Automatisierungssystemen realisiert:

### Extensiver Test der Erstellsoftware

### Nachteile:

- Eine hohe Testabdeckung ist immer schwerer zu erreichen, da die Komplexität der Erstellsoftware steigt, zunehmend Standardsoftware eingesetzt wird und bei Standardsoftware i. a. nur ein Black-Box-Test möglich ist.
- Wegen der immer kürzeren Innovationszyklen müssen entweder alte Versionen eingesetzt werden oder wegen neuer Versionen der Test wiederholt werden.
- Der Test ist nicht wirksam gegen Fehler in der Hardware der Erstellumgebung. Temporäre Fehler bei der Codegenerierung können aber z.B. durch Wiederholung und Vergleich der beiden erzeugten Varianten erkannt werden.

### Diversitärer Rückcompiler mit Änderungsvergleicher

### Beispiele: SIMATIC S5-95F von Siemens

### Nachteile:

- Im Zuge der Verbreitung von Windows-basierter Erstellsoftware nach IEC 1131 sind kleinere Hersteller von fehlersicheren Automatisierungssystemen gezwungen, derartige Erstellsoftware einzukaufen und an ihre Anforderungen anzupassen oder anpassen zu lassen.
- Diese ,Standard'-Erstellsoftware unterliegt i.a. einem kürzeren Innovationszyklus.
   ⇒ Die Realisierung eines diversitären Rückcompilers wird schwieriger.

### Vollständiger Funktionstest des sicherheitsgerichteten Anwenderprogramms

Nachteil: Nach einer Programmänderung muß wieder ein vollständiger Funktionstest durchgeführt werden.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines fehlersicheren Automatisierungssystems,
- FIG 2: eine beispielhafte erste Bildschirmdarstellung zur Erläuterung eines sicherheitsgerichteten Programms für ein Automatisierungssystem und
- FIG 3: eine beispielhafte zweite Bildschirmdarstellung zur Festlegung der Ablaufreihenfolge.

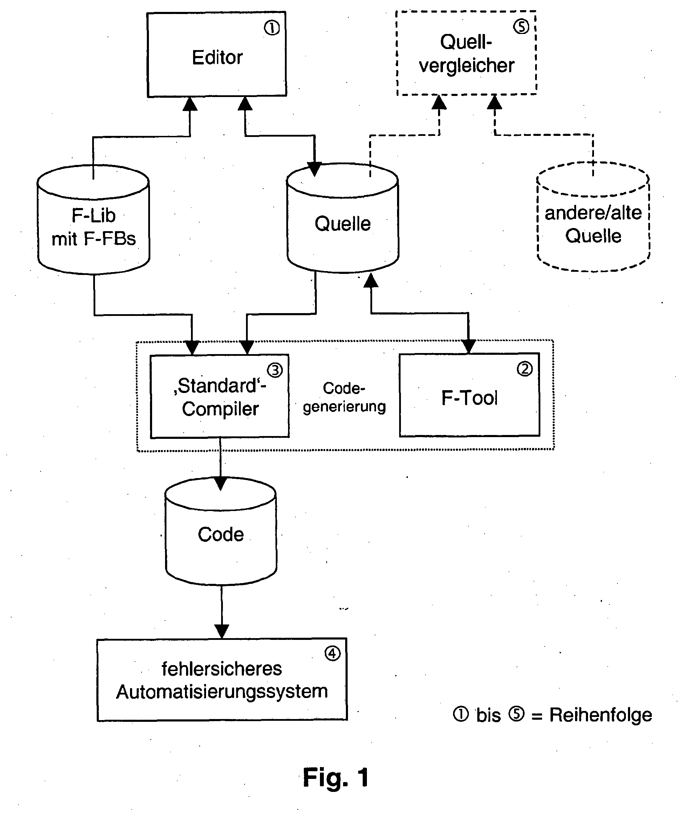

FIG 1 zeigt ein Blockschaltbild eines Ausführungsbeispiels eines fehlersicheren Automatisierungssystems. Das Automatisierungssystem ist durch folgende Merkmale gekennzeichnet:
1. Die Quelle des sicherheitsgerichteten Programms wird mit Hilfe eines nicht sicherheitsgerichteten ,Standard'-Editors erstellt.
2. Die Quelle wird durch ein ,F-Tool' um Maßnahmen zur Beherrschung von Fehlern bei der Codegenerierung - insbesondere von Compilerfehlern - ergänzt. Alle sicherheitsrelevanten Teile der Quelle werden auf eine diversitäre Art und Weise ergänzt. Erst durch diese Ergänzungen entsteht ein in sich konsistentes sicherheitsgerichtetes Programm.
3. Die ergänzte Quelle wird mit einem nicht sicherheitsgerichteten ,Standard'-Compiler übersetzt. Fehler bei der Codegenerierung - insbesondere Compilerfehler - zerstören die Konsistenz des sicherheitsgerichteten Programms.
4. Das fehlersichere Automatisierungssystem erkennt, wenn das sicherheitsgerichtete Programm nicht konsistent ist - insbesondere wenn die Ergänzungen durch das F-Tool fehlen oder falsch sind oder der Compiler Fehler macht. Es geht dann in den sicheren Zustand.
5. Nach einer Änderung der Quelle muß ein Funktionstest nur noch für die von der Änderung betroffenen Teile durchgeführt werden. Da die Codegenerierung gesichert ist, genügt es, die Änderungen auf Quellebene zu überprüfen. Dies kann durch ein Tool (Quellvergleicher) erfolgen.

Der erfinderische Schritt liegt in der
- Ergänzung der Quelle durch Maßnahmen zur Beherrschung sicherheitsrelevanter Fehler bei der Codegenerierung und der
- Kontrolle durch das fehlersichere Automatisierungssystem selbst.

Es ergeben sich folgende Vorteile:
- Der Einsatz einer nicht sicherheitsgerichteten ,Standard'-Erstellumgebung ist problemlos möglich:
   - Der ,Standard'-Compiler muß nicht zertifiziert, betriebsbewährt oder extensiv getestet sein.
   - Der ,Standard'-Compiler kann auch in der aktuellsten Version verwendet werden, da das Verfahren von der Version des ,Standard'-Compilers unabhängig ist.
   - Das Verfahren ist auch wirksam gegen Fehler in der Hardware der ,Standard'-Erstellumgebung.
- Nach einer Änderung der Quelle muß ein Funktionstest nur noch für die von der Änderung betroffenen Teile durchgeführt werden. Es genügt, die Änderungen auf Quellebene zu überprüfen.
- Die Maßnahmen zur Beherrschung sicherheitsrelevanter Fehler bei der Codegenerierung sind i.a. auch gegen Fehler der Hardware und Firmware des Automatisierungssystems wirksam.

Das sicherheitsgerichtete Programm wird mit Hilfe von sicherheitsgerichteten Funktionsbausteinen (F-FBs) aus einer Bibliothek (F-Lib) erstellt. F-FBs haben Eingangs- und Ausgangsparameter. Die instanzspezifischen Daten der F-FBs werden in Instanz-Datenbausteinen (DBs) abgelegt.

Das sicherheitsgerichtete Programm wird mit Hilfe eines Editors grafisch erstellt durch:
1. Plazierung der F-FBs in einem Plan
2. Verschaltung der Parameter der F-FBs miteinander (Ausgangsparameter mit Eingangsparametern)
3. Parametrierung unverschalteter Eingangsparameter der F-FBs
4. Festlegung der Ablaufreihenfolge der F-FBs

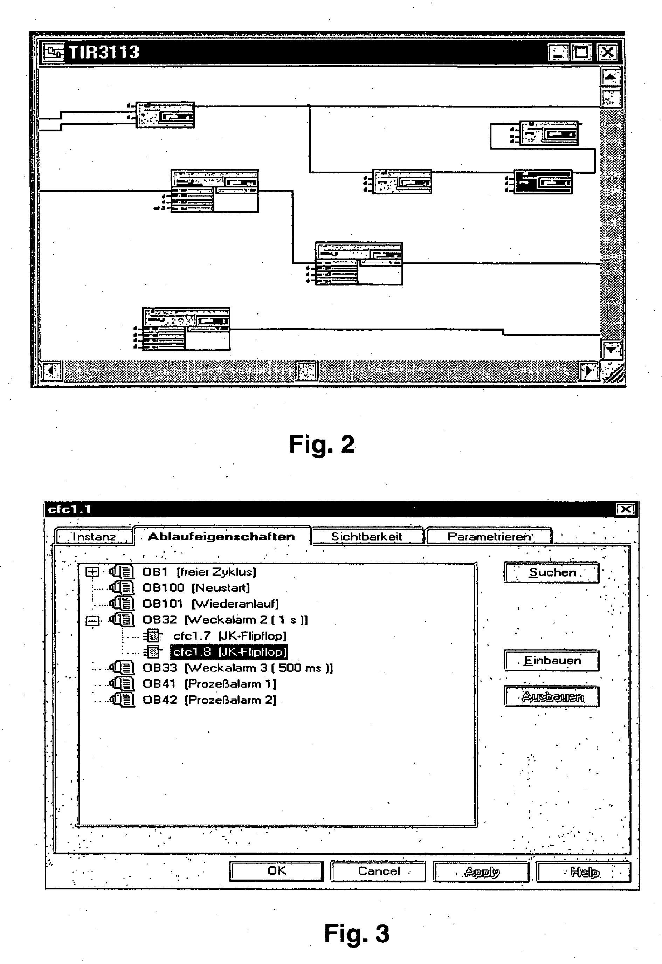

Fig. 2 veranschaulicht die Schritte 1 - 3.

FIG 3 veranschaulicht Schritt 4.

Bei der Codegenerierung wird zuerst das F-Tool gestartet. Dieses fügt in die Quelle zusätzliche F-FBs für Fehlerbeherrschungsmaßnahmen ein und führt Parametrierungen und Verschaltungen mit diesen F-FBs durch. Danach wird der ,Standard'-Compiler gestartet.

### Realisierungsalternative:

Das F-Tool kann die ergänzte Quelle statt in der alten Quelldatei auch in einer neuen Quelldatei speichern.

### Maßnahmen zur Beherrschung sicherheitsrelevanter Fehler bei der Codegenerierung

Die sicherheitsrelevanten Objekte der Quelle haben eine diversitäre Adresse:
- Die F-FBs enthalten in ihrem Code bereits einen eindeutigen FB-Identifier (FB_ID).
- Die Instanz-DBs der F-FBs erhalten vom F-Tool einen eindeutigen DB-Identifier (DB_ID). Der DB-Identifier ist Teil des Instanz-DBs.
- Die sicherheitsrelevanten Ausgangsparameter der F-FBs erhalten vom F-Tool einen eindeutigen Parameter-Identifier (PAR_ID). Der Parameter-Identifier ist Teil des Parameters, z.B. wenn sicherheitsrelevante Parameter Strukturen mit den Komponenten Parameter-Wert DATA und Parameter-Identifier PAR_ID sind.
   Die PAR_ID sicherheitsrelevanter Eingangsparameter wird mit 0 initialisiert. Diese Initialisierung ist bereits durch den F-FB festgelegt.

Die F-FBs ermitteln zur Laufzeit eine Signatur (z.B. durch XOR-Verknüpfung und anschließende Rotation um eine Stelle nach links) über
- die diversitären Adressen, d.h.
   - ihre FB_ID
   - die DB_ID ihres aktuellen Instanz-DBs
   - die PAR_IDs ihrer aktuellen sicherheitsrelevanten Eingangsparameter
- die Werte ihrer unverschalteten sicherheitsrelevanten Eingangsparameter,
   d.h. ihrer sicherheitsrelevanten Eingangsparameter, deren PAR_ID gleich 0 ist.

Bei entsprechender Signaturbildung (z.B. durch Rotation) geht neben den diversitären Adressen (FB_ID, DB_ID und PAR_ID) und den Werten der unverschalteten sicherheitsrelevanten Eingangsparameter auch die Reihenfolge, insbesondere die Ablaufreihenfolge der F-FBs, in die Signatur ein.

Das F-Tool ermittelt den Sollwert der Signatur und fügt in die Quelle einen F-FB ein, der zur Laufzeit Soll- und Istwert der Signatur miteinander vergleicht (Prüfung der Konsistenz) und bei einer Abweichung einen sicheren Zustand herbeiführt. Wenn dieser F-FB fehlt, wird ebenfalls ein sicherer Zustand eingenommen. Das kann z.B. dadurch erreicht werden, daß dieser F-FB die Ausgaben freigibt.

### Realisierungsalternative:

Die Werte der unverschalteten sicherheitsrelevanten Eingangsparameter können statt durch obige Signaturbildung auch durch Informationsredundanz gesichert werden: Das F-Tool berechnet die Check-Bits und ergänzt sie in der Quelle. Die F-FBs kontrollieren die Check-Bits und verfälschen bei einer Inkonsistenz die Signatur. Die Check-Bits können z.B. das Komplement des Parameter-Werts DATA sein und eine dritte Struktur-Komponente COMPLEM eines sicherheitsrelevanten Parameters bilden.

Bei dieser Realisierungsalternative geht der Wert der unverschalteten sicherheitsrelevanten Eingangsparameter in die von den F-FBs zur Laufzeit ermittelten Signatur nicht ein und auch die sicherheitsrelevanten unverschalteten Eingangsparameter der F-FBs erhalten vom F-Tool einen eindeutigen Parameter-Identifier (PAR_ID).

## Patentansprüche

1. Fehlersicheres Automatisierungssystem (4) mit
- einem Quellcode eines sicherheitsgerichteten Programms, wobei der Quellcode unter Verwendung eines nicht sicherheitsgerichteten Editors (1) erstellt wird,
- einem F-Tool (2) und einer Bibliothek, wobei die Bibliothek sicherheitsgerichtete Funktionsbausteine enthält, wobei die Funktionsbausteine Eingangs- und Ausgangsparameter aufweisen, wobei aktuelle sicherheitsrelevante Eingangsparameter einen Parameter-Identifier aufweisen, wobei das F-Tool (2) die Funktionsbausteine in den Quellcode bei der Codegenerierung einfügt, wobei die Funktionsbausteine einen eindeutigen Funktionsbaustein-Identifier aufweisen,
- Instanz-Datenbausteinen, wobei instanzspezifische Daten der Funktionsbausteine in den Instanz-Datenbausteinen abgelegt werden, wobei die Instanz-Datenbausteine einen eindeutigen DB-Identifier aufweisen,
- einem durch das F-Tool (2) ermittelten Sollwert der Signatur, wobei der Sollwert der Signatur die DB-Identifier der Instanz-Datenbausteine und die Funktionsbaustein-Identifier der Funktionsbausteine und die Parameter-Identifier der aktuellen sicherheitsrelevanten Eingangsparameter einschließt,
- einem nicht sicherheitsgerichteten Compiler (3), zum Übersetzen des mit Mitteln des F-Tools (2) ergänzten Quellcodes,
- Mitteln zur Ermittlung eines Istwertes der Signatur zur Laufzeit durch die Funktionsbausteine, wobei der Istwert der Signatur die eindeutigen DB-Identifier der Instanz-Datenbausteine und die Funktionsbaustein-Identifier der Funktionsbausteine und die aktuellen Parameter-Identifier der Sicherheits-gerichteten Eingangsparameter zur Laufzeit einschließt,
- Mitteln zum Vergleich des Sollwerts der Signatur und des Istwerts der Signatur zur Laufzeit durch einen Funktionsbaustein, wobei im Falle einer Nicht-Übereinstimmung das fehlersichere Automatisierungssystem (4) in einen sicheren Zustand übergeht.

2. Fehlersicheres Automatisierungssystem (4) nach Anspruch 1, wobei die Eingangsparameter der Funktionsbausteine mit den Ausgangsparametern der Funktionsbausteine verschaltet werden.

3. Fehlersicheres Automatisierungssystem (4) nach Anspruch 1 oder 2, wobei unverschaltete Eingangsparameter der Funktionsbausteine parametriert werden.

4. Fehlersicheres Automatisierungssystem (4) nach einem der vorigen Ansprüche, wobei der Sollwert der Signatur die Werte der unverschalteten sicherheitsrelevanten Eingangsparameter einschließt.

5. Fehlersicheres Automatisierungssystem (4) nach einem der vorigen Ansprüche, wobei das F-Tool (2) Check-Bits berechnet und im Quellcode ergänzt.

6. Fehlersicheres Automatisierungssystem (4) nach Anspruch 5, wobei die Funktionsbausteine die Check-Bits kontrollieren und bei einer Inkonsistenz die Signatur verfälschen.

7. Fehlersicheres Automatisierungssystem (4) nach einem der vorigen Ansprüche, wobei im Falle eines Fehlens von entsprechenden Funktionsbausteinen das Automatisierungssystem in einen sicheren Zustand übergeht.

8. Fehlersicheres Automatisierungssystem (4) nach einem der vorigen Ansprüche, wobei die Funktionsbausteine den Istwert der Signatur durch XOR-Verknüpfung und anschließende Rotation um eine Stelle nach links ermitteln.

9. Fehlersicheres Automatisierungssystem (4) nach einem der vorigen Ansprüche, wobei der Istwert der Signatur und der Sollwert der Signatur die Ablaufreihenfolge der Funktionsbausteine einschließt.

10. Verfahren zur Fehlersicherung bei einem Automatisierungssystem (4) mit den folgenden Schritten:
- Erstellung eines Quellcodes eines sicherheitsgerichteten Programms unter Verwendung eines nicht sicherheitsgerichteten Editors (1),
- Ergänzung des Quellcodes durch ein 'F-Tool' (2), wobei das F-Tool (2) zur Beherrschung von Fehlern bei einer Codegenerierung ausgebildet ist, wobei durch die Ergänzung des Quellcodes mit dem F-Tool (2) sicherheitsgerichtete Funktionsbausteine in den Quellcode bei der Codegenerierung eingefügt werden, wobei die Funktionsbausteine in einer Bibliothek enthalten sind, wobei die Funktionsbausteine Eingangs- und Ausgangsparameter aufweisen, wobei aktuelle sicherheitsrelevante Eingangsparameter einen Parameter-Identifier aufweisen,
- Ermittlung eines Sollwerts der Signatur durch das F-Tool, wobei der Sollwert der Signatur eindeutige DB-Identifier von Instanz-Datenbausteinen und Funktionsbaustein-Identifier der Funktionsbausteine und Parameter-Identifier der aktuellen sicherheitsrelevanten Eingangsparameter einschließt, wobei instanzspezifische Daten der Funktionsbausteine in den Instanz-Datenbausteinen ablegbar sind, wobei die Instanz-Datenbausteine einen eindeutigen DB-Identifier aufweisen,
- Übersetzen des mit Mitteln des F-Tools (2) ergänzten Quellcodes mit einem nicht sicherheitsgerichteten Compiler (3),
- Ermittlung eines Istwerts der Signatur zur Laufzeit durch die Funktionsbausteine, wobei der Istwert der Signatur die eindeutigen DB-Identifier der Instanz-Datenbausteine und die Funktionsbaustein-Identifier der Funktionsbausteine und die aktuellen Parameter-Identifier der Sicherheits-gerichteten Eingangsparameter zur Laufzeit einschließt,
- Vergleich des Sollwerts der Signatur und des Istwerts der Signatur zur Laufzeit durch einen Funktionsbaustein, wobei im Falle einer Nicht-Übereinstimmung das Automatisierungssystem (4) in einen sicheren Zustand übergeht.

11. Verfahren zur Fehlersicherung nach Anspruch 10, wobei nach einer Änderung des Quellcodes ein Funktionstest nur noch für die von der Änderung betroffenen Teile des Quellcodes durchgeführt wird.

12. Verfahren zur Fehlersicherung nach Anspruch 10 oder 11, wobei die Änderungen auf einer Ebene des Quellcodes überprüft werden.

13. Verfahren zur Fehlersicherung nach einem der vorigen Ansprüche 10 bis 12, wobei die Überprüfung der Änderungen auf der Ebene des Quellcodes durch einen als Quellvergleicher (5) ausgebildetes Mittel erfolgen.

## Claims

1. Fail-safe automation system (4) having
- a source code of a safety-oriented program, wherein the source code is generated using a non-safety-oriented editor (1),
- an F-tool (2) and a library, wherein the library contains safety-oriented function modules, wherein the function modules have input and output parameters, wherein current safety-related input parameters have a parameter identifier, wherein the F-tool (2) inserts the function modules into the source code during code generation, wherein the function modules have a unique function module identifier,
- instance data modules, wherein instance-specific data of the function modules is stored in the instance data modules, wherein the instance data modules have a unique DB identifier,
- a setpoint value, determined by the F-tool (2), of the signature, wherein the setpoint value of the signature includes the DB identifiers of the instance data modules and the function module identifiers of the function modules and the parameter identifiers of the current safety-related input parameters,
- a non-safety-oriented compiler (3), for translating the source code supplemented using means of the F-tool (2),
- means for determination of an actual value of the signature at run-time by the function modules, wherein the actual value of the signature contains the unique DB identifiers of the instance data modules and the function module identifiers of the function modules and the current parameter identifiers of the safety-oriented input parameters at run-time,
- means for comparison of the setpoint value of the signature and of the actual value of the signature at run-time by a function module, wherein if there is a lack of correspondence the fail-safe automation system (4) enters a safe state.

2. Fail-safe automation system (4) according to claim 1, wherein the input parameters of the function modules are interconnected to the output parameters of the function modules.

3. Fail-safe automation system (4) according to claim 1 or 2, wherein non-interconnected input parameters of the function modules are parameterised.

4. Fail-safe automation system (4) according to one of the preceding claims, wherein the setpoint value of the signature includes the values of the non-interconnected safety-related input parameters.

5. Fail-safe automation system (4) according to one of the preceding claims, wherein the F-tool (2) calculates check bits and adds them to the source code.

6. Fail-safe automation system (4) according to claim 5, wherein the function modules check the check bits and invalidate the signature in the event of an inconsistency.

7. Fail-safe automation system (4) according to one of the preceding claims, wherein in the absence of corresponding function modules the automation system enters a safe state.

8. Fail-safe automation system (4) according to one of the preceding claims, wherein the function modules determine the actual value of the signature using XOR linking and subsequent rotation by one place to the left.

9. Fail-safe automation system (4) according to one of the preceding claims, wherein the actual value of the signature and the setpoint value of the signature includes the execution sequence of the function modules.

10. Method for failure safety in an automation system (4), having the following steps:
- generation of a source code of a safety-oriented program using a non-safety-oriented editor (1),
- supplementing the source code using an F-tool (2), wherein the F-tool (2) is designed to handle errors during code generation, wherein by supplementing the source code using the F-tool (2) safety-oriented function modules are inserted into the source code during code generation, wherein the function modules are contained in a library, wherein the function modules have input and output parameters, wherein current safety-related input parameters have a parameter identifier,
- determination of a setpoint value of the signature by the F-tool, wherein the setpoint value of the signature includes unique DB identifiers of instance data modules and function module identifiers of the function modules and parameter identifiers of the current safety-related input parameters, wherein instance-specific data of the function modules can be stored in the instance data modules, wherein the instance data modules have a unique DB identifier,
- translation of the source code supplemented using means of the F-tool (2), using a non-safety-oriented compiler (3),
- determination of an actual value of the signature at run-time by the function modules, wherein the actual value of the signature contains the unique DB identifiers of the instance data modules and the function module identifiers of the function modules and the current parameter identifiers of the safety-oriented input parameters at run-time,
- comparison of the setpoint value of the signature and of the actual value of the signature at run-time using a function module, wherein if there is a lack of correspondence the automation system (4) enters a safe state.

11. Method for failure safety according to claim 10, wherein following a change in the source code a function test is performed only for the parts of the source code affected by the change.

12. Method for failure safety according to claim 10 or 11, wherein the changes are examined on one layer of the source code.

13. Method for failure safety according to one of the preceding claims 10 to 12, wherein the examination of the changes is effected on the layer of the source code using means designed as a source comparator (5).

## Revendications

1. Système ( 4 ) d'automatisation sécurisé vis-à-vis des erreurs comprenant
- un code source d'un programme de sécurisation, le code source étant établi en utilisant un éditeur ( 1 ) non sécurisé,
- un outil ( 2 ) F et une bibliothèque, la bibliothèque contenant des modules fonctionnels sécurisés, les modules fonctionnels ayant des paramètres d'entrée et de sortie, des paramètres d'entrée présents pertinents pour la sécurité ayant un identificateur de paramètre, l'outil F ( 2 ) insérant les modules fonctionnels dans le code source lors de la production du code, les modules fonctionnels ayant un identificateur univoque de modules fonctionnels,
- des modules de données d'instance, des données spécifiques à une instance des modules fonctionnels étant mis dans les modules de données d'instance, les modules de données d'instance ayant un identificateur DB univoque,
- une valeur de consigne, déterminée par l'outil F ( 2 ), de la signature, la valeur de consigne de la signature incluant l'identification DB des modules de données d'instance et l'identificateur des modules fonctionnels et l'identificateur de paramètre incluant des paramètres d'entrée présents pertinents pour la sécurisation,
- un compilateur ( 3 ) non sécurisé pour la traduction du code source complété au moyen de l'outil F ( 2 ),
- des moyens de détermination d'une valeur réelle de la signature pour la durée d'exécution par les modules fonctionnels, la valeur réelle de la signature incluant les identificateurs DB univoques des modules de données d'instance et les identificateurs des modules fonctionnels et les identificateurs présents des paramètres d'entrée de sécurisation pour la durée d'exécution,
- des moyens de comparaison de la valeur de consigne de la signature et de la valeur réelle de la signature pour la durée d'exécution par un module fonctionne,1 dans lequel, dans le cas d'une absence de coïncidence, le système ( 4 ) d'automatisation sécurisé vis-à-vis d'une erreur passe dans un état sécurisé.

2. Système ( 4 ) d'automatisation sécurisé vis-à-vis d'une erreur suivant la revendication 1, dans lequel on combine les paramètres d'entrée des modules fonctionnels aux paramètres de sortie des modules fonctionnels.

3. Système ( 4 ) d'automatisation sécurisé vis-à-vis d'une erreur suivant la revendication 1 ou 2, dans lequel on paramétrise des paramètres d'entrée non combinés des modules fonctionnels.

4. Système ( 4 ) d'automatisation sécurisé vis-à-vis d'une erreur suivant l'une des revendications précédentes, dans lequel la valeur de consigne de la signature inclut les valeurs des paramètres d'entrée de sécurisation non combinés.

5. Système ( 4 ) d'automatisation sécurisé vis-à-vis d'une erreur suivant l'une des revendications précédentes, dans lequel l'outil F ( 2 ) calcul des bits de contrôle et les mets en complément dans le code source.

6. Système ( 4 ) d'automatisation sécurisé vis-à-vis d'une erreur suivant la revendication 5, dans lequel les modules fonctionnels contrôlent les bits de contrôle et en cas d'incohérence falsifient la signature.

7. Système ( 4 ) d'automatisation sécurisé vis-à-vis d'une erreur suivant l'une des revendications précédentes, dans lequel, dans le cas d'une erreur de modules fonctionnels adéquats, le système d'automatisation passe dans un état sécurisé.

8. Système ( 4 ) d'automatisation sécurisé vis-à-vis d'une erreur suivant l'une des revendications précédentes, dans lequel les modules fonctionnels déterminent la valeur réelle de la signature par combinaison logique OU exclusif et ensuite par rotation d'une position vers la gauche.

9. Système ( 4 ) d'automatisation sécurisé vis-à-vis d'une erreur suivant l'une des revendications précédentes, dans lequel la valeur réelle de la signature et la valeur de consigne de la signature incluent la succession de déroulement des modules fonctionnels.

10. Procédé de sécurisation vis-à-vis d'une erreur dans un système ( 4 ) d'automatisation comprenant les stades suivants :
- on établit un code source d'un programme de sécurisation en utilisant un éditeur ( 1 ) non sécurisé,
- on complète le code source par un "outil F" ( 2 ), l'outil F ( 2 ) étant constitué pour maîtriser des erreurs lors de la production d'un code, dans lequel, en complétant le code source par l'outil F ( 2 ), on insère des modules fonctionnels de sécurisation dans le code source lors de la production du code, dans lequel les modules fonctionnels sont contenus dans une bibliothèque, les modules fonctionnels ayant des paramètres d'entrée et de sortie, des paramètres d'entrée présents de sécurisation ayant un identificateur de paramètre,
- on détermine une valeur de consigne de la signature par l'outil F, la valeur de consigne de la signature incluant des identificateurs DB univoques de modules de données d'instance et des identificateurs des modules fonctionnels et des identificateurs des paramètres d'entrée présents de sécurisation, des données spécifiques d'instance des modules fonctionnels pouvant être mises dans les modules de données d'instance, les modules de données d'instance ayant un identificateur DB univoque,
- on traduit le code source complété au moyen de l'outil F ( 2 ) par un compilateur ( 3 ) non sécurisé,
- on détermine une valeur réelle de la signature pour la durée d'exécution par les modules fonctionnels, la valeur réelle de la signature incluant les identificateurs DB univoques des modules de données d'instance et les identificateurs des modules fonctionnels et les identificateurs présents des paramètres d'entrée de sécurisation pour la durée d'exécution,
- on compare la valeur de consigne de la signature et la valeur réelle de la signature pour la durée d'exécution par un module fonctionnel, dans lequel, dans le cas où il n'y a pas coïncidence, le système ( 4 ) d'automatisation passe dans un état sécurisé.

11. Procédé de sécurisation vis-à-vis d'une erreur suivant la revendication 10, dans lequel après une modification du code source on effectue un test fonctionnel seulement pour les parties du code source concernées par la modification.

12. Procédé de sécurisation vis-à-vis d'une erreur suivant la revendication 10 ou 11, dans lequel on contrôle les modifications sur un plan du code source.

13. Procédé de sécurisation vis-à-vis d'une erreur suivant la revendication 10 à 12, dans lequel on effectue le contrôle des modifications sur le plan du code source par un moyen constitué sous la forme d'un comparateur ( 5 ) de source.
